# EUROPEAN PATENT APPLICATION

(11) **EP 2 322 873 A2**
(43) Date of publication of application: **18.05.2011**
(21) Application number: 10190084.3
(22) Date of filing: 05.11.2010
(51) Int. Cl.: F24J 2/52, H01L 31/042

(54) **Frame assembly for a photovoltaic panel**

(30) Priority: 12.11.2009 US 616815
(71) Applicant: General Electric Company, Schenectady, NY 12345 (US)
(72) Inventor: Colarusso, John P., Newark, DE 19702 (US); Hessler, William Kirk, Newark, DE 19702 (US)
(74) Representative: Bedford, Grant Richard

(57) **Abstract**

A frame assembly 10 for a photovoltaic panel 20 is disclosed, as is a method for framing a photovoltaic panel 20. An exemplary embodiment of the frame assembly 10 includes the following: a first elongate support component 12 including a first end, an opposing second end, and a cross section that is approximately F-shaped; a second elongate support component 12 including a third end, an opposing fourth end, and a cross section that is approximately F-shaped; a first elongate retainer component 16 including a cross section that is approximately L-shaped and is configured to be secured to the first end and the third end; and a first elongate retainer component 16 including a cross section that is approximately L-shaped and is configured to be secured to the second end and the fourth end. The disclosed frame assembly 10 permits rapid top-down assembly to increase manufacturing throughput.

## Description

The present disclosure is primarily directed to a frame assembly for a photovoltaic panel and to a method for framing a photovoltaic panel.

Conventional frame assemblies for photovoltaic panels (e.g., solar modules) utilize grooves. These frame assemblies generally are quadrilateral and include four frame pieces, each of which has a groove. The frame is applied by respectively wedging or otherwise inserting a side edge of the photovoltaic panel into a groove of a frame piece. This process is repeated three times, i.e., until the each of the four side edges of the photovoltaic panel has been inserted into a groove of a different frame piece. The top edge of the groove provides for mechanical retention of the photovoltaic panel. Thus, in instances of primary attachment failure, usually adhesive failure, the photovoltaic panel still is retained somewhat securely within the frame. However, significant labor and skill, or a specialized framing machine, is generally required to frame a photovoltaic panel in this manner, in part because either each of the four frame pieces is applied from a different direction, or the photovoltaic panel, itself, is rotated or otherwise re-oriented during the framing process. Also, defects caused by dimensional deviations in glass (thickness, width, and/or length) and frame tolerances can lead to assembly issues.

Accordingly, there is a need for a frame assembly that enables photovoltaic panels to be framed using simpler, more efficient manufacturing practices and that still provides for mechanical retention of the photovoltaic panel.

In accordance with one aspect of the disclosure, a frame assembly is disclosed. The frame assembly includes the following: a first elongate support component having a cross section that is approximately F-shaped, a first end, and an opposing second end; a second elongate support component having a cross section that is approximately F-shaped, a third end, and an opposing fourth end; a first elongate retainer component having a cross section that is approximately L-shaped, the first elongate retainer component being configured to be secured to the first end and the third end; and a second elongate retainer component having a cross section that is approximately L-shaped, the second elongate retainer component being configured to be secured to the second end and the fourth end. The first elongate support component, the second elongate support component, the first elongate retainer component, and the second elongate retainer component fit together to define a space suitable for a photovoltaic panel.

In accordance with another aspect of the disclosure, a frame assembly for a photovoltaic panel is disclosed. The frame assembly includes a first elongate support component having a first lengthwise surface portion and an adjacent second lengthwise surface portion. The first lengthwise surface portion is configured to enclose a first side of a photovoltaic panel, and a first lengthwise shelf-like projection projects from between the first lengthwise surface portion and the second lengthwise surface portion. The first lengthwise shelf-like projection has a first projection surface and an opposing second projection surface. The first projection surface is at least approximately orthogonal to the first lengthwise surface portion and is configured to support a first edge portion of a first major surface of the photovoltaic panel, the first edge portion including the first side. Additionally, the frame assembly includes a first elongate retainer component having a third lengthwise surface portion configured to enclose a second side of a photovoltaic panel, the second side being at least substantially perpendicular to the first side. The first elongate retainer component further includes a second lengthwise projection having a fourth lengthwise surface portion. The fourth lengthwise surface portion is at least approximately orthogonal to the third lengthwise surface portion, and is configured to overlay a second edge portion of a second major surface of the photovoltaic panel, the second edge portion partially overlaying the first edge portion at a corner portion.

In accordance with yet another aspect of the disclosure, a method for framing a photovoltaic panel is disclosed. The method includes providing a frame assembly that includes the following: a first elongate support component having a cross section that is approximately F-shaped, a first end, and an opposing second end; a second elongate support component having a cross section that is approximately F-shaped, a third end, and an opposing fourth end; a first elongate retainer component having a cross section that is approximately L-shaped, the first elongate retainer component being configured to be secured to the first end and the third end; and a second elongate retainer component having a cross section that is approximately L-shaped, the second elongate retainer component being configured to be secured to the second end and the fourth end. The first elongate support component, the second elongate support component, the first elongate retainer component, and the second elongate retainer component fit together to define a space suitable for a photovoltaic panel. The method includes positioning the photovoltaic panel on the first elongate support component and on the second elongate support component. Additionally, the method includes positioning the first elongate retainer component and the second elongate retainer component on the first elongate support component and on the second elongate support component. Also, the method includes securing the first elongate retainer component and the second elongate retainer component to the first elongate support component and to the second elongate support component, to retain the photovoltaic panel in the frame assembly.

An advantage of the disclosed frame assembly is that it is compatible with top-down assembly methods, which are generally more compatible with automation, potentially reducing manufacturing costs.

Another advantage of the disclosed frame assembly is that it does not require insertion of a photovoltaic panel into any groove or other similar restricted space during assembly of a framed photovoltaic panel. Accordingly, the disclosed frame assembly is tolerant of dimensional variations in photovoltaic panels.

Still another advantage of the disclosed frame assembly is that it mechanically retains the photovoltaic panel, reducing or eliminating the need for dependence on adhesives (e.g., liquid adhesives, adhesive-backed tape) while still providing a redundant retention system.

Various features and advantages of the present invention will be apparent from the following more detailed description of the corresponding embodiments, taken in conjunction with the accompanying drawings which illustrate, by way of example, the principles of the invention, and in which:
FIG. 1 is an exploded view, in perspective, of a photovoltaic panel framed by a frame assembly for a photovoltaic panel, according to an embodiment of the present invention.
FIG. 2 is another exploded view, in perspective, of the frame assembly shown in FIG. 1.
FIG. 3 is a perspective view of a photovoltaic panel framed by the frame assembly shown in FIG. 1.
FIG. 4 is a partial view, in perspective, of an end of an elongate support component, a component of the frame assembly shown in FIG. 1.
FIG. 5 is a front plan view of the elongate support component shown in FIG. 4.
FIG. 6 is a section view of the elongate support component taken along lines 6-6 of FIG. 5.
FIG. 7 is a partial view, in perspective, of an end of an elongate retainer component, another component of the frame assembly shown in FIG. 1.
FIG. 8 is a front plan view of the elongate retainer component shown in FIG. 7.
FIG. 9 is a section view of the elongate retainer component taken along lines 9-9 of FIG. 8.
FIG. 10 is a partial view, in perspective, of an end of another exemplary elongate support component.
FIG. 11 is a front plan view of the elongate support component shown in FIG. 10.
FIG. 12 is a section view of the elongate support component taken along lines 12-12 of FIG. 11.
FIG. 13 is a partial view, in perspective, of an end of still another exemplary elongate support component.
FIG. 14 is a front plan view of the elongate support component shown in FIG. 13.
FIG. 15 is a section view of the elongate support component taken along lines 15-15 of FIG. 14.

Wherever possible, the same reference numbers are used throughout the drawings to refer to the same or like parts.

The following detailed description includes references to the accompanying drawings, which form a part of the detailed description. The drawings show, by way of illustration, specific embodiments in which the disclosure may be practiced. These embodiments, which are also referred to herein as "examples," are described in enough detail to enable those skilled in the art to practice the disclosure. The embodiments may be combined, other embodiments may be utilized, or structural, logical and electrical changes may be made without departing from the scope of the present disclosure. The following detailed description is, therefore, not to be taken in a limiting sense, and the scope of the present disclosure is defined by the appended claims and their equivalents.

In this document, the terms "a" or "an" are used, as is common in patent documents, to include one or more than one. In this document, the term "or" is used to refer to a nonexclusive or, unless otherwise indicated.

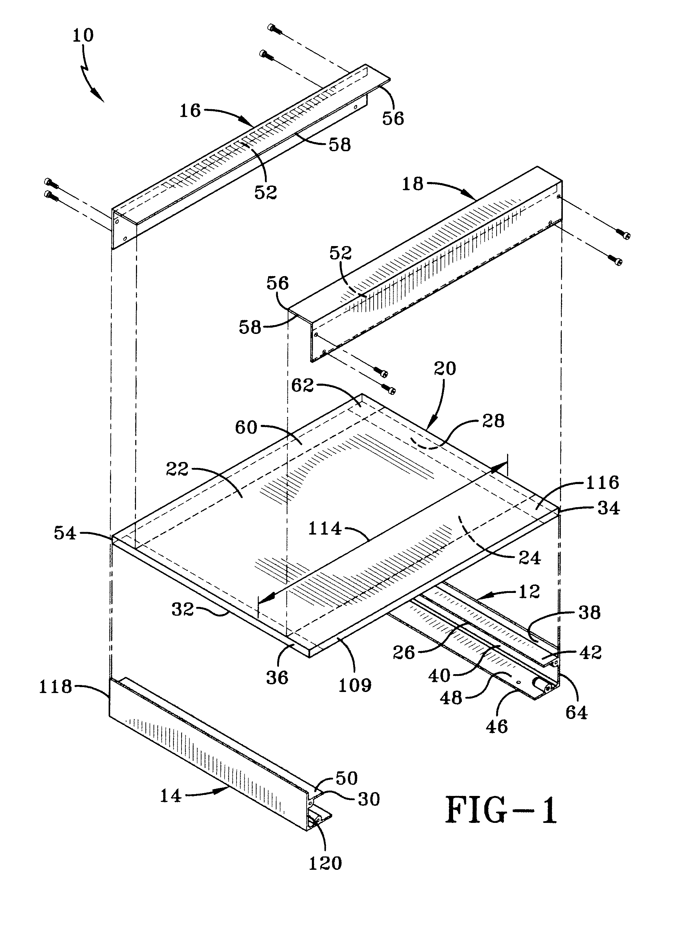

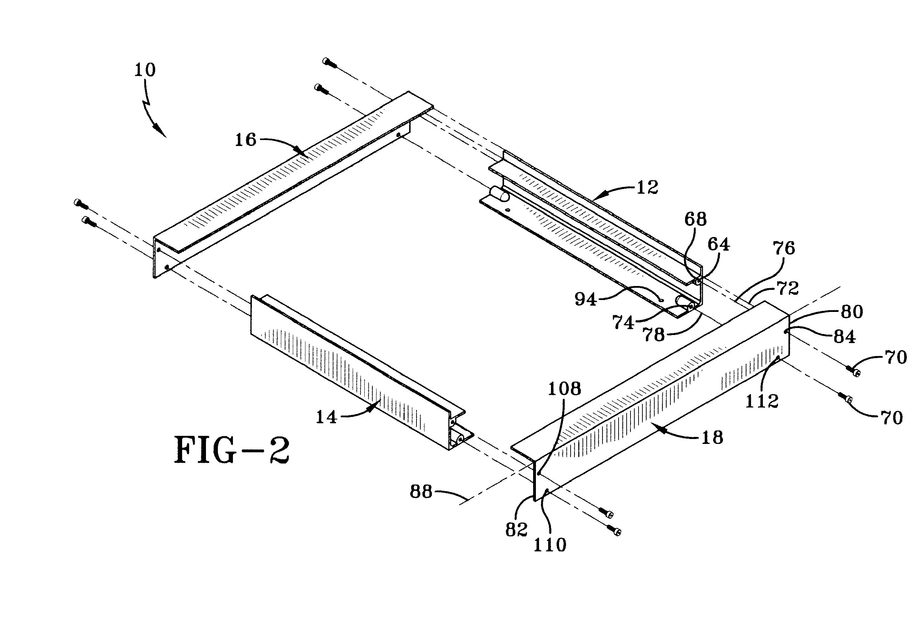

FIGS. 1 and 2 provide an overview of an exemplary embodiment of the frame assembly for a photovoltaic panel. Frame assembly 10 may include the following frame components: a first elongate support component 12, a second elongate support component 14, a first elongate retainer component 16, and a second elongate retainer component 18. As shown in FIG. 1, which is an exploded view of a photovoltaic panel 20 within frame assembly 10, first elongate support component 12 and second elongate support component 14, in combination, are configured to support and partially enclose a photovoltaic panel 20 having an exposed (light-facing) major surface 22 and an unexposed (non-light-facing) major surface 24. More specifically, first elongate support component 12 includes a first lengthwise shelf-like projection 26 configured to support photovoltaic panel 20 along an edge portion 28 of unexposed major surface 24. Second elongate support component 14 includes a second lengthwise shelf-like projection 30 configured to support photovoltaic panel 20 along an edge portion 32 of unexposed major surface 24. As shown in FIGS. 1 and 2, first elongate support component 12 and second elongate support component 14 may be at least substantially equivalent and may be arranged and disposed in opposition to one another. Edge portion 28 is adjacent a side 34 of photovoltaic panel 20, and edge portion 32 is adjacent an opposing side 36 of photovoltaic panel 20. Side 34 and side 36 may be parallel, as shown in FIG. 1.

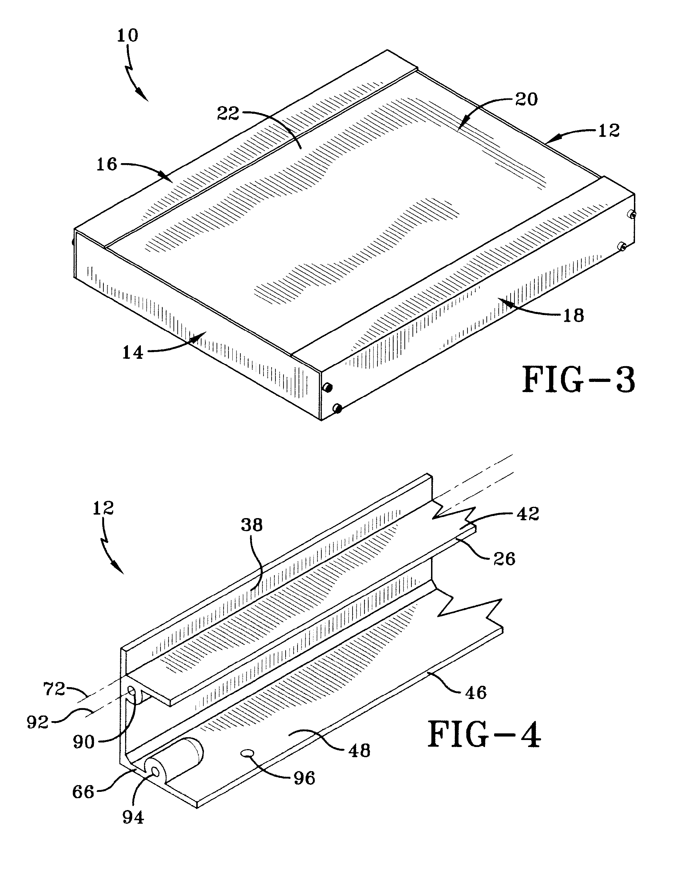

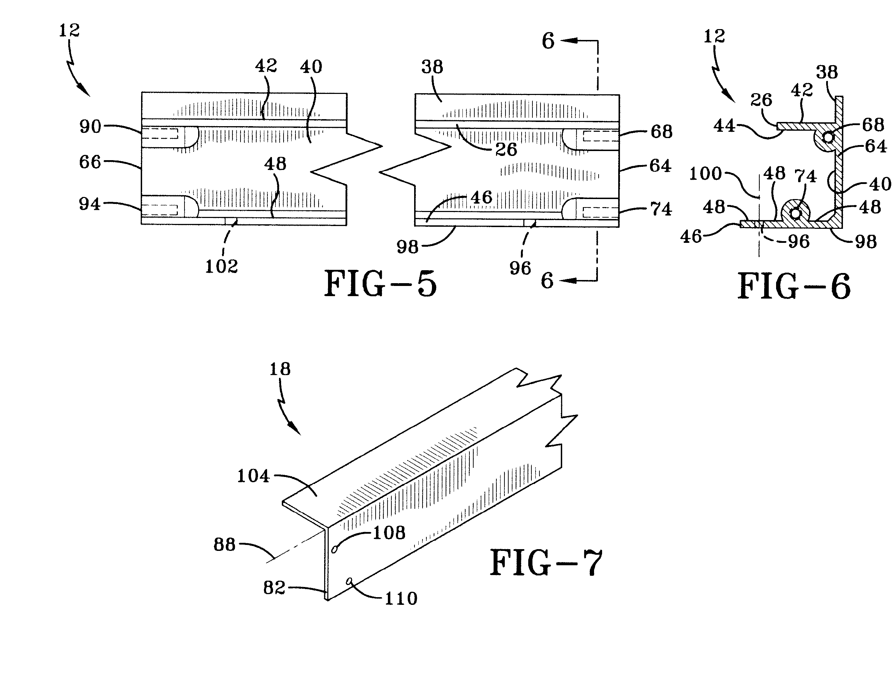

First elongate support component 12 includes a first lengthwise surface portion 38 and an adjacent second lengthwise surface portion 40 (see also FIG. 3 at 40 and FIG. 5 at 40). First lengthwise surface portion 38 is configured to enclose a (first) side 34 of a photovoltaic panel. As shown in FIGS. 1, 3, and 5, first lengthwise surface portion 38 and second lengthwise surface portion 40 may be at least approximately coplanar. First lengthwise shelf-like projection 26 projects from between the first lengthwise surface portion 38 and the second lengthwise surface portion 40. First lengthwise shelf-like projection 26 has a first substantially planar projection surface 42 and a second projection surface (see FIG. 6 at 44). First substantially planar projection surface 42 is approximately orthogonal to the first lengthwise surface portion 38 and is configured to support a (first) edge portion 28 of unexposed major surface 24 of photovoltaic panel 20. First edge portion 28 is substantially orthogonal to first side 34. First elongate support component 12 may include a second lengthwise projection 46 substantially parallel first lengthwise shelf-like projection 26. As shown in FIGS. 1, 2, and 5, second lengthwise projection 46 may have a third projection surface 48 that is at least approximately orthogonal to the second lengthwise surface portion 40. Additional features of first elongate support component 12 are described later in this specification. Second elongate support component 14, which (as stated previously) includes second lengthwise shelf-like projection 30, includes a second substantially planar projection surface 50 that is configured to support photovoltaic panel 20 along edge portion 32. Edge portion 32 parallels edge portion 28 and is orthogonal to opposing side 36. Additionally, second elongate support component 14 includes the remaining features of first elongate support component 12 described above.

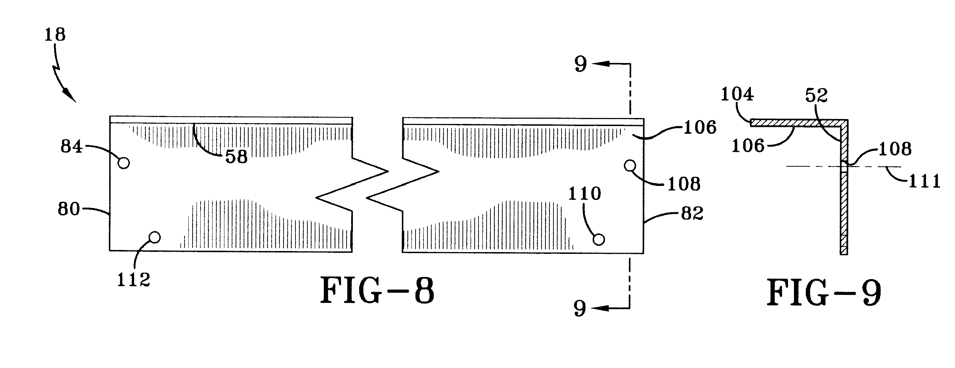

Referring to FIG. 1, first elongate retainer component 16 includes a third lengthwise surface portion 52 configured to enclose a second side 54 of photovoltaic panel 20. Second side 54 is at least substantially perpendicular to first side 34. First elongate retainer component 16 includes a third lengthwise projection 56 having a fourth lengthwise surface portion 58. Fourth lengthwise surface portion 58 *(see* FIG. 8), which is at least approximately orthogonal to third lengthwise surface portion 56, is configured to overlay a (second) edge portion 60 of exposed major surface 22 of photovoltaic panel 20. Second edge portion 60 is substantially orthogonal to second side 54. Second edge portion 60 partially overlays first edge portion 28 at a corner portion 62. In this manner, first elongate retainer component 16 aids in retaining photovoltaic panel 20 by entrapping corner portion 62 against first elongate support component 12, more particularly against first substantially planar projection surface 42 of first lengthwise shelf-like projection 26. Thus, first elongate support component 12 and first elongate retainer component 16 cooperate to limit movement of photovoltaic panel 20 within frame assembly 10. Referring still to FIG. 1, first lengthwise surface portion 38 of first elongate support component 12 and third lengthwise surface portion 52 of first elongate retainer component 16 cooperate to limit horizontal movement of photovoltaic panel 20 within frame assembly 10. As shown in FIGS. 1 and 2, first elongate retainer component 16 and second elongate retainer component 18 may be at least substantially equivalent and may be arranged and disposed in opposition to one another. Thus, as suggested by FIG. 1, a first elongate support component 12 cooperates in a similar manner with second elongate retainer component 18 to limit horizontal movement and vertical movement of photovoltaic panel 20 within frame assembly 10. Additionally, second elongate support component 14 cooperates with first elongate retainer component 16 and second elongate retainer component 18 to limit horizontal movement and vertical movement of photovoltaic panel 20 within frame assembly 10.

FIG. 2 shows how the components of frame assembly 10 shown in FIG. 1 are secured together. First elongate support component 12 includes a first end 64 and an opposing second end 66, which is not visible in FIG. 2, but is visible in FIG. 4. First elongate support component 12 includes a first fastener-receiving through-opening 68 proximate to or adjacent first end 64. First fastener-receiving through-opening 68 is configured to receive a fastener 70 (e.g., a bolt) therein along an axis 76 substantially parallel to a lengthwise axis 72 of first elongate support component 12. As shown in FIG. 2, first elongate support component 12 may include an additional fastener-receiving through-opening 74 proximate to or adjacent first end 64. Additional fastener-receiving through-opening 74 is configured to receive another fastener 70 therein along a second axis 78 substantially parallel to lengthwise axis 72 of first elongate support component 12. Second elongate retainer component 18 includes a third end 80 and an opposing fourth end 82. Second elongate retainer component 18 includes a second fastener-receiving through-opening 84 proximate to or adjacent third end 80. Second fastener-receiving through-opening 84 is configured to receive fastener 70 therein along axis 76, which is substantially perpendicular to a lengthwise axis 88 of second elongate retainer component 18. When second elongate retainer component 18 overlays portions of first elongate support component 12 *(see* FIGS. 1-3), first fastener-receiving through-opening 68 is substantially aligned with second fastener-receiving through-opening 84 along axis 76. Accordingly, fastener 70 may pass through both first fastener-receiving through-opening 68 and second fastener-receiving through-opening 84 to secure first elongate support component 12 to second elongate retainer component 18. Other examples of a fastener 70 suitable for this application include pop rivets and force-fit pins, or the frame components could be staked or welded to one another. In an alternate embodiment, first end 64 of first elongate support component 12 may include a tab that projects parallel to lengthwise axis 72 (i.e., projects lengthwise), and second elongate retainer component 18 may include a tab-receiving slot that is arranged and disposed in a similar manner to second fastener-receiving through-opening 84. The tab may be inserted through the tab-receiving slot, and then folded, thereby securing first elongate support component 12 to second elongate retainer component 18. Referring still to FIG. 2, second elongate support component 14 includes the features described above in relation to first elongate support component 12. Also, first elongate retainer component 16 includes the features described above in relation to second elongate retainer component 18.

FIG. 3 shows a photovoltaic panel 20 framed by frame assembly 10. First elongate retainer component 16 is secured to first elongate support component 12 and to second elongate support component 14. Similarly, second elongate retainer component 18 is secured to first elongate support component 12 and to second elongate support component 14. Frame assembly 10 supports, encloses, and retains photovoltaic panel 20. It is worth noting that each of the frame components of frame assembly 10 may be formed from aluminum (e.g., extruded hardened, anodized aluminum), stamped steel, rolled steel, plastic, carbon-filled plastic, or other material recognized as suitable for this application. Again, frame components include the following: first elongate support component 12, second elongate support component 14, first elongate retainer component 16, and second elongate retainer component 18.

FIG. 4 is a enlarged partial view, in perspective, of a second end 66 of first elongate support component 12. As stated previously, first lengthwise surface portion 38 and second lengthwise surface portion 40 may be at least approximately coplanar. Again, first lengthwise shelf-like projection 26 projects from between the first lengthwise surface portion 38 and the second lengthwise surface portion 40. First lengthwise shelf-like projection 26 has a first substantially planar projection surface 42 and a second projection surface (see FIG. 6 at 44) First substantially planar projection surface 42 is approximately orthogonal to the first lengthwise surface portion 38 and is configured to support edge portion 28 of photovoltaic panel 20 (see FIG. 1). First elongate support component 12 may include a second lengthwise projection 46 substantially parallel first lengthwise shelf-like projection 26. Second lengthwise projection 46 may have a third projection surface 48 that is at least approximately orthogonal to the second lengthwise surface portion 40. Additionally, FIG. 4 shows that first elongate support component 12 defines a fastener-receiving through-opening 90 proximate to or adjacent second end 66. As shown in FIG. 4, fastener-receiving through-opening 90 may be defined near the intersection of second lengthwise surface portion 40 and a second projection surface *(see* FIG. 6 at 44). Fastener-receiving through-opening 90 is configured to receive a fastener (e.g., a bolt) therein along an axis 92 substantially parallel to lengthwise axis 72 of first elongate support component 12. Referring still to FIG. 4, first elongate support component 12 may include an additional fastener-receiving through-opening 94 proximate to or adjacent second end 66. Additional fastener-receiving through-opening 94 is defined near third projection surface 48. Second lengthwise projection 46 of first elongate support component 12 also includes a through-opening 96 that passes through both third projection surface 48 and an opposing projection surface *(see* FIG. 6 at 98). Through-opening 96 is configured to allow a peg or similar device to pass therethrough and aid in maintaining first elongate support component 12 in proper position during framing of photovoltaic panel 20 *(see* FIG. 1). Through-opening 96 may also aid in installing frame assembly 10 (*e.g*., used for mounting) in preparation for generating electricity.

FIG. 5, which is a front view of first elongate support component 12, shows first lengthwise shelf-like projection 26 and second lengthwise projection 46, among other features introduced previously. For example, FIG. 5 shows first end 64, including first fastener-receiving through-opening 68 and additional fastener-receiving through-opening 74. Additionally, FIG. 5 shows second end 66, including fastener-receiving through-opening 90 and additional fastener-receiving through-opening 94.

FIG. 6, which is a section view of first elongate support component 12 taken along lines 6-6 of FIG. 5, shows many of the features shown in FIGS. 4 and 5. FIG. 6 shows that first elongate support component 12 may have a cross section that is approximately "F"-shaped. This is even more evident if FIG. 6 is rotated clockwise about 180 degrees. FIG. 6 also shows that second lengthwise projection 46 may include a through-opening 96 proximate to first end 64 that passes through third projection surface 48 and an opposing projection surface 98. Through-opening 96 may be configured to receive a peg therethrough. For instance, during a top-down assembly of frame assembly 10, as indicated in FIG. 1, a peg may temporarily pass through through-opening 96 to assist in maintaining first elongate support component 12 in proper position and orientation (e.g., parallel to second elongate support component 14). Later, during installation of a photovoltaic panel 20 framed by frame assembly 10, a fastener may be passed through through-opening 96 to attach the framed photovoltaic panel to an appropriate surface. Through-opening 96 may also be used for ground connection. As shown in FIG. 6, through-opening 96 may be configured to receive a fastener therethrough along an axis 100 substantially perpendicular to opposing projection surface 98. Referring again to FIG. 5, first elongate support component 12 may include an additional through-opening 102, which is proximate to second end 66. Additional through-opening 102, like through-opening 96, passes through third projection surface 48 and opposing projection surface 98. Additional through-opening 102 is configured similarly to through-opening 96 and serves a similar purpose. In regard to the features described above, second elongate support component 14 may be substantially equivalent to first elongate support component 12.

FIGS. 7-9 show various features of second elongate retainer component 18. FIG. 7 is a partial view, in perspective, of fourth end 82 (see FIG. 2); FIG. 8 is a front plan view; and FIG. 9 is a section view taken along lines 9-9 of FIG. 8. Similar to third lengthwise projection 56 of first elongate retainer component 16 (see FIG. 1), second elongate retainer component 18 includes a lengthwise projection 104 having a lengthwise surface portion 106 (see FIGS. 8 and 9). Lengthwise surface portion 106 of second elongate retainer component 18 is analogous to that of third lengthwise surface portion 52 (see FIG. 1) of first elongate retainer component 16, which encloses a second side 54 of photovoltaic panel 20. More specifically, lengthwise surface portion 106 is configured to enclose a third side 109 (see FIG. 1) of photovoltaic panel 20. Second elongate retainer component 18 includes a fastener-receiving through-opening 108 proximate to or adjacent fourth end 82. Fastener-receiving through-opening 108 is configured to receive a fastener therethrough along an axis 111 to fasten second elongate retainer component 18 to second elongate support component 14 (see FIG. 2). Second elongate retainer component 18 may include an additional fastener-receiving through-opening 110 (see also FIG. 2) to allow a fastener to pass therethrough and further assist in securing second elongate retainer component 18 to second elongate support component 14. Similarly, proximate to third end 80, second elongate retainer component 18 may include another additional fastener-receiving through-opening 112 (see FIGS. 2 and 8), which is configured to allow a fastener to pass therethrough and further assist in securing second elongate retainer component 18 to first elongate support component 12. FIG. 9 shows that second elongate retainer component 18 may have a cross section that is approximately "L"-shaped. This is even more evident if FIG. 9 is rotated clockwise about 180 degrees.

FIGS. 1 and 3, in combination, show a significant advantage of various aspects of the present invention, specifically, that a top-down method may be used in framing photovoltaic panel 20 with frame assembly 10. First elongate support component 12 and second elongate support component 14 are positioned and oriented in parallel such that first lengthwise shelf-like projection 26 and second lengthwise shelf-like projection 30 are projecting toward one another. Furthermore, the distance between first lengthwise surface portion 38 of first elongate support component 12 and the corresponding lengthwise surface portion of second elongate support component 14 should be approximately equal to a width 114 *(see* FIG. 1) of photovoltaic panel 20. Together, first elongate support component 12 and second elongate support component 14, serve as a support assembly. Next, photovoltaic panel 20, which includes first edge portion 28 and second edge portion 32, is rested on the support assembly such that first substantially planar projection surface 42 supports first edge portion 28 and second substantially planar projection surface 50 supports (opposing) second edge portion 32. Optionally, tape, caulk, or adhesive can easily be applied to first substantially planar projection surface 42 (see FIG. 1) and second substantially planar projection surface 50 (see FIG. 1) of the support assembly, prior to resting photovoltaic panel 20 on these surfaces 42, 50. Next, first elongate retainer component 16 and second elongate retainer component 18 are respectively placed over each of the remaining edge portions: (adjacent) edge portion 60 and (opposing) adjacent edge portion 116 *(see* FIG. 1). Thereafter, first elongate retainer component 16 is secured to second end 66 of first elongate support component 12 and to a first end 118 *(see* FIG. 1) of second elongate support component 14. Similarly, second elongate retainer component 18 is secured to first end 64 of first elongate support component 12 and to second end 120 of second elongate support component 14, to yield a photovoltaic panel 20 framed by frame assembly 10 *(see* FIG. 3). This top-down method is more amenable to automation, partial automation, full robotic placement or even manual assembly, potentially reducing manufacturing costs, increasing profits and increasing speed of assembly.

Another advantage of frame assembly 10 is that it is not required that photovoltaic panel 20 be inserted into any groove or other similar restricted space during assembly of the framed photovoltaic panel. There are commonly slight, but potentially significant, dimensional variations among identical models of photovoltaic panels 20. For example, the thickness of the photovoltaic panels 20 may vary despite good manufacturing practices. Consequently, a frame assembly that comprises a lengthwise groove for receiving an edge of a photovoltaic panel is disadvantaged in that some panels 20 within a lot may be too thick to force into the groove without damaging the (expensive, non-repairable) panel. Others may be too thin to be securely held within the groove. Frame assembly 10 is advantaged in that no groove or other similar restricted space is used in framing photovoltaic panel 20. Instead, as shown in FIGS. 1 and 3, first and second elongate retainer components 16, 18 overlay first and second elongate support components 12, 14 to support, enclose, and retain photovoltaic panel 20. Accordingly, frame assembly 10 is more tolerant of dimensional variations in photovoltaic panels 20 than frame assemblies that utilize grooves. This tolerance may even be enhanced by altering the shape of through openings 68, 84, 90 and 108 (see FIGS. 5 and 8), among others. More specifically, although these openings are shown as circular (cylindrical) in the Figures, elliptical or clover-shaped through-openings or slot-like through-openings may be used to slightly enhance the range of tolerance of frame assembly 10 insofar as one or more dimensions of photovoltaic panel 20 are concerned (i.e., length, width, thickness). For example, a fastener may be inserted through one end of an ellipse to allow frame assembly 10 to accommodate a photovoltaic panel 20 having a shorter dimension than indicated in the model specification, or through an opposing end of the ellipse to allow frame assembly 10 to accommodate a photovoltaic panel 20 having a longer dimension indicated in the model specification.

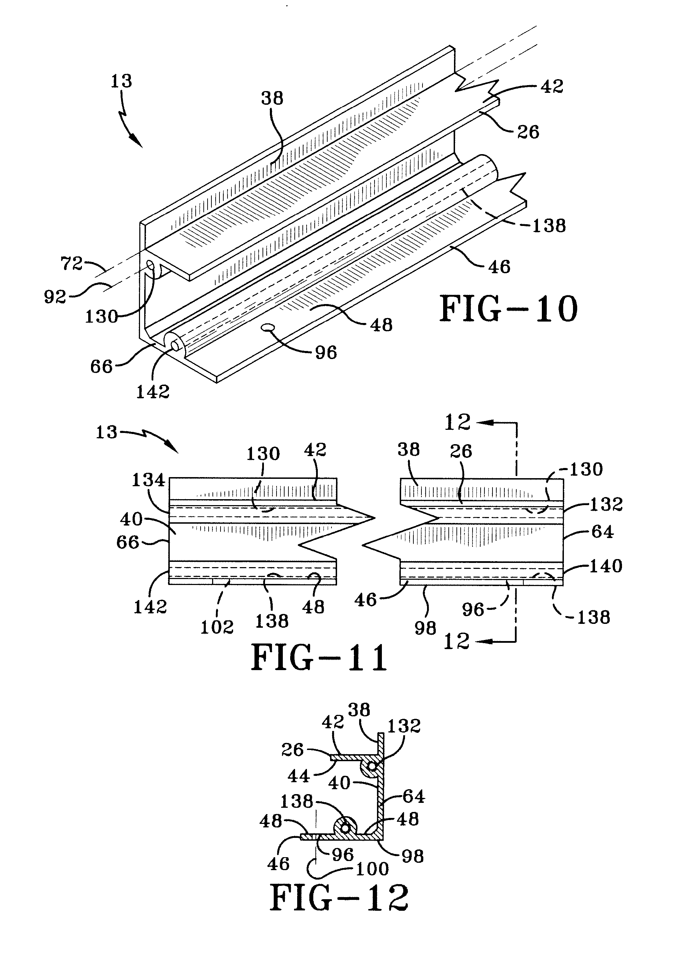

FIGS. 10-12 are views of an alternate embodiment of the first elongate support component shown in FIGS. 4-6. As shown in FIGS. 10-12, first elongate support component 13, while similar to first elongate support component 12 of FIGS. 4-6, is more compatible with being manufacturing using an extrusion-based process. As shown in FIG. 11, which is a front plan view of elongate support component 13, a first lengthwise fastener-receiving through-opening 130 may be defined near the intersection of second lengthwise surface portion 40 and a second projection surface *(see* FIG. 12 at 44). First lengthwise fastener-receiving through-opening 130 is configured to receive fasteners (e.g., a bolts) therein along an axis 92 (see FIG. 10) substantially parallel to lengthwise axis 72 (see FIG. 10) of first elongate support component 13 (see FIG. 10). A first through-opening end 132 (see FIG. 11) of first lengthwise fastener-receiving through-opening 130 is substantially flush with first end 64 (see FIG. 11) and is configured to receive a fastener therethrough. An (opposing) second through-opening end 134 of first lengthwise fastener-receiving through-opening 130 is substantially flush with second end 66 (see FIG. 11) and is configured to receive another fastener therethrough, in the opposing direction. First lengthwise fastener-receiving through-opening 130 performs the functions of both first fastener-receiving through-opening 68 (see FIG. 5) and fastener-receiving through-opening 90 (see FIG. 5) of first elongate support component 12 (see FIG. 5). Alternatively, one very long fastener may pass through both first through-opening end 132 and second through-opening end 134 to secure first elongate support component 13 to first elongate retainer component 16 (see FIG. 2) and second elongate retainer component 18 (see FIG. 2), respectively. Insofar as first lengthwise fastener-receiving through-opening 130 is concerned, the cross-section (e.g., FIG. 12) of first elongate support component 13 does not change when progressing lengthwise along first elongate support component 13, rendering this feature especially compatible with extrusion-based manufacturing. Similarly, a second lengthwise fastener-receiving through-opening 138 may be defined along third projection surface 48. A third through-opening end 140 (see FIG. 11) of second lengthwise fastener-receiving through-opening 138 is substantially flush with first end 64 (see FIG. 11). An (opposing) fourth through-opening end 142 of second lengthwise fastener-receiving through-opening 138 is substantially flush with second end 66 (see FIG. 11). Insofar as second lengthwise fastener-receiving through-opening 138 is concerned, the cross-section (e.g., FIG. 12) of first elongate support component 13 also does not change when progressing lengthwise along first elongate support component 13. Accordingly, this feature is especially compatible with extrusion-based manufacturing. The only substantial variation in cross-section of elongate support component 13 is due to the presence of through-opening 96 and additional through-opening 102. While through-openings 96 and 102 are not essential, they can be added following extrusion using a variety of art-recognized methods. Frame assembly 10 may include a second elongate support component that is substantially equivalent to first elongate support component 13.

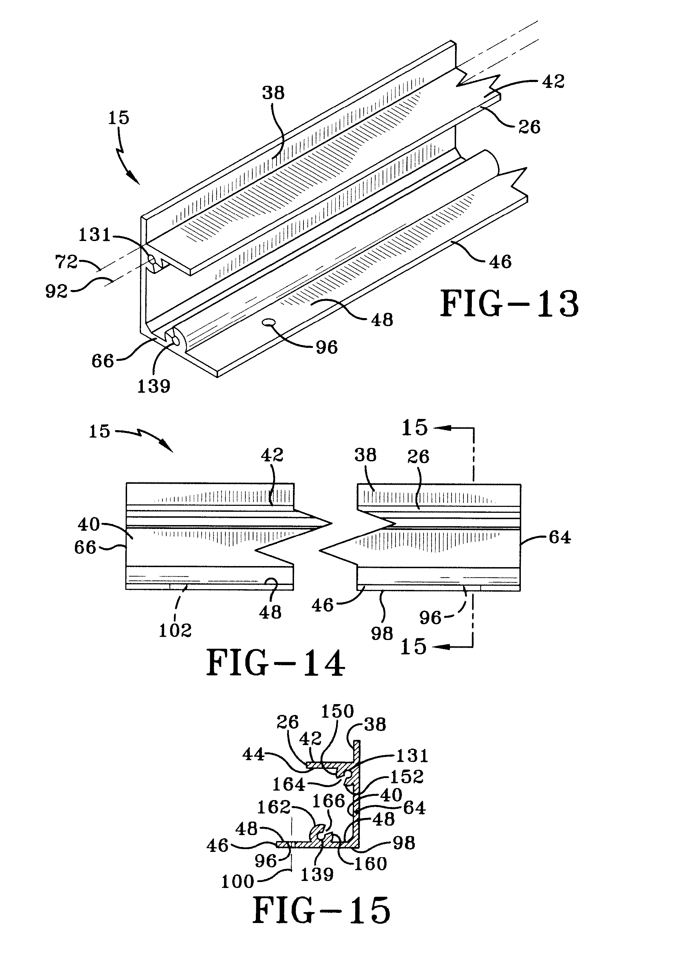

FIGS. 13-15 are views of another alternate embodiment of the first elongate support component shown in FIGS. 4-6. As shown in FIGS. 13-15, first elongate support component 15, while similar to first elongate support component 13 of FIGS. 10-12, is very compatible with being manufacturing using an extrusion-based process. As shown in FIGS. 13 and 15, a first lengthwise fastener-receiving through-opening 131, while similar to first lengthwise fastener-receiving through-opening 130 (see FIGS. 10 and 12), differs in that first lengthwise fastener-receiving through-opening 131 is only substantially enclosed, not fully enclosed, resulting in first lengthwise groove-type opening 164 (see FIG. 15). First lengthwise fastener-receiving through-opening 131 is partially defined by a lengthwise projection 150 projecting from second projection surface 44 and is additionally partially defined by a lengthwise projection 152 projecting from second lengthwise surface portion 40. These lengthwise projections 150, 152 are especially amenable to extrusion-based manufacturing. Similarly, as shown in FIGS. 13 and 15, a second lengthwise fastener-receiving through-opening 139, while similar to second lengthwise fastener-receiving through-opening 138 (see FIGS. 10 and 12), differs in that second lengthwise fastener-receiving through-opening 139 is only substantially enclosed, not fully enclosed, resulting in second lengthwise groove-type opening 166 (see FIG. 15). Second lengthwise fastener-receiving through-opening 139 is partially defined by a lengthwise projection 160 projecting from third projection surface 48 and is additionally partially defined by a lengthwise projection 162, which also projects from third projection surface 48. As shown in FIGS. 13 and 15, first lengthwise groove-type opening 164 and second lengthwise groove-type opening 166 generally do not face the same direction, thereby promoting a more secure connection among the frame components. As shown in FIGS. 13 and 15, for example, first lengthwise groove-type opening 164 and second lengthwise groove-type opening 166 even may substantially face one another, rendering it more difficult for non-axial forces *(i.e.,* forces non-parallel to axes such as lengthwise axis 72 and axis 92 of FIG. 13) to simultaneously dislodge both a fastener in first lengthwise groove-type opening 164 and a fastener in second lengthwise groove-type opening 166. Frame assembly 10 may include a second elongate support component that is substantially equivalent to first elongate support component 15.

Although frame assembly 10 is shown in the Figures as having a rectangular shape, the invention disclosed herein may be practiced using other shapes (*e.g*., square, trapezoid, parallelogram, triangle), which may be advantageous in some applications. Frame assembly 10, including its positive retention features, may also be adapted for use in oval or circular configurations.

While the invention has been described with reference to a preferred embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

Various aspects and embodiments of the present invention are defined by the following numbered clauses:
1. A frame assembly for a photovoltaic panel, the frame assembly comprising:
   a first elongate support component;
   a second elongate support component,
   a first elongate retainer component; and
   a second elongate retainer component;
   wherein the first elongate support component, the second elongate support component, the first elongate retainer component, and the second elongate retainer component fit together in a top-down assembly to define a space suitable for a photovoltaic panel.
2. A frame assembly comprising:
   a first elongate support component comprising a cross section that is approximately F-shaped, a first end, and an opposing second end;
   a second elongate support component comprising a cross section that is approximately F-shaped, a third end, and an opposing fourth end;
   a first elongate retainer component comprising a cross section that is approximately L-shaped, the first elongate retainer component being configured to be secured to the first end and the third end; and,
   a second elongate retainer component comprising a cross section that is approximately L-shaped, the second elongate retainer component being configured to be secured to the second end and the fourth end;
   wherein the first elongate support component, the second elongate support component, the first elongate retainer component, and the second elongate retainer component fit together to define a space suitable for a photovoltaic panel.
3. The frame assembly of any preceding Clause, the first elongate support component further comprising a lengthwise axis and a first fastener-receiving through-opening proximate or adjacent to the first end, the first fastener-receiving through-opening being configured to receive a fastener therethrough along an axis parallel to the lengthwise axis.
4. The frame assembly of any preceding Clause, the first elongate retainer component further comprising a lengthwise axis and a first fastener-receiving through-opening proximate or adjacent to the third end, the first fastener-receiving through-opening being configured to receive a fastener therethrough along an axis perpendicular to the lengthwise axis.
5. A frame assembly for retaining a photovoltaic panel, the frame assembly comprising:
   a first elongate support component comprising:
      a first lengthwise surface portion and a second lengthwise surface portion, the first lengthwise surface portion being configured to enclose a first side of a photovoltaic panel;
      a first lengthwise shelf-like projection projecting from between the first lengthwise surface portion and the second lengthwise surface portion, the first lengthwise shelf-like projection having a first projection surface and a second projection surface, the first projection surface being approximately orthogonal to the first lengthwise surface portion and being configured to support a first edge portion of a first major surface of the photovoltaic panel, the first edge portion including the first side; and,
      a first elongate retainer component comprising:
   a third lengthwise surface portion configured to enclose a second side of a photovoltaic panel, the second side being substantially perpendicular to the first side; and,
   a second lengthwise projection having a fourth lengthwise surface portion, the fourth lengthwise surface portion being at least approximately orthogonal to the third lengthwise surface portion, the fourth lengthwise surface portion being configured to overlay a second edge portion of a second major surface of the photovoltaic panel, the second edge portion partially overlaying the first edge portion.
6. The frame assembly of any preceding Clause, the first elongate support component further comprising:
   a first end and a first fastener-receiving through-opening proximate or adjacent the first end; and,
   a second end and a second fastener-receiving through-opening proximate or adjacent the second end.
7. The frame assembly of any preceding Clause, the first elongate retainer component further comprising:
   a third end and a third fastener-receiving through-opening proximate or adjacent the third end; and,
   a fourth end and a fourth fastener-receiving through-opening proximate or adjacent the fastener end.
8. The frame assembly of any preceding Clause, the first elongate support component further comprising a third lengthwise projection at least substantially parallel the first lengthwise shelf-like projection, the third lengthwise projection having a second projection surface being approximately orthogonal to the second lengthwise surface portion.
9. The frame assembly of any preceding Clause, wherein the first lengthwise surface portion and the second lengthwise surface portion are at least approximately coplanar.
10. The frame assembly of any preceding Clause, the first elongate support component further comprising a cross section that is approximately F-shaped.
11. The frame assembly of any preceding Clause, the first elongate retainer component further comprising a cross section that is approximately L-shaped.
12. The frame assembly of any preceding Clause, the first elongate support component further comprising a lengthwise axis, and wherein the first fastener-receiving through-opening is configured to receive a fastener therethrough along an axis parallel to the lengthwise axis.
13. The frame assembly of any preceding Clause, the first elongate retainer component further comprising a lengthwise axis, and wherein the third fastener-receiving through-opening is configured to receive a fastener therethrough along an axis perpendicular to the lengthwise axis.
14. The frame assembly of any preceding Clause, further comprising a second elongate support component, the second elongate support component being substantially structurally identical to the first elongate support component.
15. The frame assembly of any preceding Clause, further comprising a second elongate retainer component, the second elongate retainer component being substantially structurally identical to the first elongate retainer component.
16. The frame assembly of any preceding Clause, wherein the composition of the first elongate support component includes a material selected from the group consisting of aluminum, anodized aluminum, stamped steel, rolled steel, plastic, and carbon-filled plastic.
17. The frame assembly of any preceding Clause, wherein the composition of the first elongate retainer component includes a material selected from the group consisting of aluminum, anodized aluminum, stamped steel, rolled steel, plastic, and carbon-filled plastic.
18. The frame assembly of any preceding Clause, wherein the first projection surface of the first lengthwise shelf-like projection is substantially planar.
19. A method for framing a photovoltaic panel, the method comprising:
   providing a frame assembly comprising:
      a first elongate support component comprising a cross section that is approximately F-shaped, a first end, and an opposing second end;
      a second elongate support component comprising a cross section that is approximately F-shaped, a third end, and an opposing fourth end;
      a first elongate retainer component comprising a cross section that is approximately L-shaped, the first elongate retainer component being configured to be secured to the first end and the third end; and,
      a second elongate retainer component comprising a cross section that is approximately L-shaped, the second elongate retainer component being configured to be secured to the second end and the fourth end;
   positioning the photovoltaic panel on the first elongate support component and on the second elongate support component;
   positioning the first elongate retainer component and the second elongate retainer component on the first elongate support component and on the second elongate support component; and,
   securing the first elongate retainer component and the second elongate retainer component to the first elongate support component and to the second elongate support component, to retain the photovoltaic panel in the frame assembly.
20. The method of any preceding Clause, wherein the first elongate support component further comprises a lengthwise axis and a first fastener-receiving through-opening proximate or adjacent to the first end, the first fastener-receiving through-opening being configured to receive a fastener therethrough along an axis parallel to the lengthwise axis.
21. The method of any preceding Clause, wherein the first elongate retainer component further comprises a lengthwise axis and a first fastener-receiving through-opening proximate or adjacent to the third end, the first fastener-receiving through-opening being configured to receive a fastener therethrough along an axis perpendicular to the lengthwise axis.

## Claims

1. A frame assembly (10) for retaining a photovoltaic panel (20), the frame assembly (10) comprising:
a first elongate support component (12) comprising:
a first lengthwise surface portion (38) and a second lengthwise surface portion (40), the first lengthwise surface portion (38) being configured to enclose a first side (34) of a photovoltaic panel (20);
a first lengthwise shelf-like projection (26) projecting from between the first lengthwise surface portion (38) and the second lengthwise surface portion (40), the first lengthwise shelf-like projection (26) having a first projection surface (42) and a second projection surface (44), the first projection surface (42) being approximately orthogonal to the first lengthwise surface portion (38) and being configured to support a first edge portion (28) of a first major surface of the photovoltaic panel (20), the first edge portion (28) including the first side (34); and
a first elongate retainer component (16) comprising:
a third lengthwise surface portion (52) configured to enclose a second side of a photovoltaic panel (20), the second side being substantially perpendicular to the first side (34); and
a second lengthwise projection (30) having a fourth lengthwise surface portion (58), the fourth lengthwise surface portion (58) being at least approximately orthogonal to the third lengthwise surface portion (52), the fourth lengthwise surface portion (58) being configured to overlay a second edge portion (60) of a second major surface of the photovoltaic panel (20), the second edge portion (60) partially overlaying the first edge portion (28).

2. The frame assembly (10) of Claim 1, the first elongate support component (12) further comprising:
a first end and a first fastener-receiving through-opening (68) proximate or adjacent the first end; and
a second end and a second fastener-receiving through-opening (84) proximate or adjacent the second end.

3. The frame assembly (10) of any preceding Claim, the first elongate retainer component (16) further comprising:
a third end and a third fastener-receiving through-opening (90) proximate or adjacent the third end; and
a fourth end and a fourth fastener-receiving through-opening (94) proximate or adjacent the fourth end.

4. The frame assembly (10) of any preceding Claim, the first elongate support component (12) further comprising a third lengthwise projection at least substantially parallel the first lengthwise shelf-like projection (26), the third lengthwise projection (56) having a second projection surface (44) being approximately orthogonal to the second lengthwise surface portion (40).

5. The frame assembly (10) of any preceding Claim, wherein the first lengthwise surface portion (38) and the second lengthwise surface portion (40) are at least approximately coplanar.

6. The frame assembly (10) of any preceding Claim, the first elongate support component (12) further comprising a cross section that is approximately F-shaped.

7. The frame assembly (10) of any preceding Claim, the first elongate retainer component (16) further comprising a cross section that is approximately L-shaped.

8. The frame assembly (10) of any preceding Claim, further comprising a second elongate support component (14), the second elongate support component (14) being substantially structurally identical to the first elongate support component (12).

9. The frame assembly (10) of any preceding Claim, further comprising a second elongate retainer component (18), the second elongate retainer component (18) being substantially structurally identical to the first elongate retainer component (16).

10. The frame assembly (10) of any preceding Claim, wherein the composition of the first elongate support component (12) includes a material selected from the group consisting of aluminum, anodized aluminum, stamped steel, rolled steel, plastic, and carbon-filled plastic.
